# EUROPÄISCHE PATENTANMELDUNG

(11) **EP 4 400 926 A1**
(43) Veröffentlichungstag der Anmeldung: **17.07.2024**
(21) Anmeldenummer: 23151163.5
(22) Anmeldetag: 11.01.2023
(51) Int. Cl.: G05B 19/418, H02J 50/00

(54) **WERKZEUGMASCHINE MIT EINEM WERKZEUG UND VERFAHREN ZUR GEWINNUNG VON ENERGIE FÜR EINE KOMMUNIKATIONSVORRICHTUNG IN EINEM WERKZEUG EINER WERKZEUGMASCHINE**

(71) Anmelder: Hilti Aktiengesellschaft, 9494 Schaan (LI)
(72) Erfinder: Balter, Marco, 6830 Rankweil (AT); Volke, Dominik, 9475 Sevelen (CH); Rieger, Hans-Joerg, 6712 Thueringen (AT)
(74) Vertreter: Hilti Aktiengesellschaft Corporate Intellectual Property

(57) **Zusammenfassung**

Die vorliegende Erfindung betrifft eine Werkzeugmaschine mit einem Werkzeug, wobei das Werkzeug der Werkzeugmaschine eine Kommunikationsvorrichtung umfasst. Die Kommunikationsvorrichtung ist dazu eingerichtet, Betriebsparameter der Werkzeugmaschine und/oder des Werkzeugs aufzuzeichnen, wobei die Kommunikationsvorrichtung darüber hinaus dazu eingerichtet ist, die für ihren Betrieb erforderliche Energie selbst aus einem Arbeitsprozess der Werkzeugmaschine zu gewinnen. In einem zweiten Aspekt betrifft die Erfindung ein Verfahren zur Gewinnung von Energie für eine Kommunikationsvorrichtung, die in einem Werkzeug einer solchen Werkzeugmaschine angeordnet vorliegt. Mit der Erfindung kann die Werkzeugmaschine zu einer aktiven Kommunikation ertüchtigt werden, da die Betriebsenergie für die Kommunikationsvorrichtung aus dem Betrieb der Werkzeugmaschine selbst gewonnen wird.

## Beschreibung

Die vorliegende Erfindung betrifft eine Werkzeugmaschine mit einem Werkzeug, wobei das Werkzeug der Werkzeugmaschine eine Kommunikationsvorrichtung umfasst. Die Kommunikationsvorrichtung ist dazu eingerichtet, Betriebsparameter der Werkzeugmaschine und/oder des Werkzeugs aufzuzeichnen, wobei die Kommunikationsvorrichtung darüber hinaus dazu eingerichtet ist, die für ihren Betrieb erforderliche Energie selbst aus einem Arbeitsprozess der Werkzeugmaschine zu gewinnen. In einem zweiten Aspekt betrifft die Erfindung ein Verfahren zur Gewinnung von Energie für eine Kommunikationsvorrichtung, die in einem Werkzeug einer solchen Werkzeugmaschine angeordnet vorliegt. Mit der Erfindung kann die Werkzeugmaschine zu einer aktiven Kommunikation ertüchtigt werden, da die Betriebsenergie für die Kommunikationsvorrichtung aus dem Betrieb der Werkzeugmaschine selbst gewonnen wird.

### Hintergrund der Erfindung:

Im Bereich der Werkzeugmaschinen ist die Verwendung von passiven Kommunikationsvorrichtungen bekannt. Solche passiven Kommunikationsvorrichtungen kennt der Fachmann insbesondere unter der Bezeichnet "Tag", wobei solche passiven Tags häufig mit der Verwendung von Nahfeld-Kommunikation (near field communication, NFC) oder der RFID-Technologie (Radio Frequency IDentification) assoziiert werden. Dabei kann ein Lesegerät ("reader") mittels von ihm ausgesendeten Funkwellen dem Tag Energie zur Verfügung stellen. Der Tag kann die auf diese Weise erhaltene Energie verwenden, um Informationen zu senden, wenn er über ausreichend Energie dazu verfügt.

Nachteilig an den bekannten passiven Kommunikationsvorrichtungen ist aber, dass sie auf den Erhalt von Energie durch ein Lesegerät angewiesen sind. In der Abwesenheit eines Lesegeräts ist nachteiligerweise kein Datenaustausch oder ein Auslesen von Daten aus dem passiven Tag möglich.

Darüber hinaus sind im Stand der Technik auch solche Kommunikationsvorrichtungen bekannt, die über Energieversorgungsvorrichtungen, wie Batterien, verfügen und die für ihren Betrieb erforderliche Energie mit sich führen. Energieversorgungsvorrichtungen weisen aber üblicherweise Abmessungen auf, die die Abmessungen einer Kommunikationsvorrichtung bei Weitem übersteigen. Insofern ist der Einsatz von Kommunikationsvorrichtungen mit Energieversorgungsvorrichtungen vor allem in Anwendungsgebieten, in denen wenig Bauraum zur Verfügung steht oder besonders dünne Kommunikationsvorrichtungen eingesetzt werden sollen, nicht oder nur eingeschränkt möglich.

Die Aufgabe, die der vorliegenden Erfindung zugrunde liegt, besteht darin, die vorstehend beschriebenen Mängel und Nachteile des Standes der Technik zu überwinden und eine Werkzeugmaschine mit einer Kommunikationsvorrichtung bereitzustellen, die unabhängig von einem Lesegerät arbeiten und kommunizieren kann. Die Fachwelt würde es darüber hinaus begrüßen, wenn eine solche Kommunikationsvorrichtung zur Integration in ein Werkzeug einer Werkzeugmaschine besonders raumsparend und kompakt ausgebildet sein könnte. Ein weiteres Anliegen der Erfindung besteht darin, ein Verfahren zur Gewinnung von Energie für eine Kommunikationsvorrichtung, die in einem Werkzeug einer solchen Werkzeugmaschine angeordnet vorliegt, anzugeben, wobei die Kommunikationsvorrichtung unabhängig von der Anwesenheit oder Abwesenheit eines Lesegeräts arbeiten können soll.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist eine Werkzeugmaschine mit einem Werkzeug vorgesehen. Das Werkzeug umfasst der Werkzeugmaschine eine Kommunikationsvorrichtung, wobei die Kommunikationsvorrichtung dazu eingerichtet ist, Betriebsparameter der Werkzeugmaschine und/oder des Werkzeugs aufzuzeichnen, wobei die Kommunikationsvorrichtung darüber hinaus dazu eingerichtet ist, die für die Aufzeichnung der Betriebsparameter erforderliche Energie aus einem Arbeitsprozess der Werkzeugmaschine zu gewinnen. Durch die Gewinnung der Betriebsenergie für die Kommunikationsvorrichtung aus dem Betrieb der Werkzeugmaschine selbst kann im Rahmen der Erfindung eine aktive Kommunikationsvorrichtung verwendet werden, die beispielsweise von einem aktiven Tag oder einem Beacon gebildet werden kann. Mit anderen Worten kann die im Kontext der vorliegenden Erfindung eingesetzte Kommunikationsvorrichtung als aktive Kommunikationsvorrichtung ausgebildet sein, die dazu eingerichtet ist, die für ihren Betrieb erforderliche Energie selbst aus dem Arbeitsprozess der Werkzeugmaschine heraus zu gewinnen und damit unabhängig von einem Lesegerät Daten austauschen zu können. Die bevorzugt aktiv ausgebildete Kommunikationsvorrichtung kann beispielsweise von einer elektronischen Baugruppe gebildet werden, wobei im Kontext der vorliegenden Erfindung vorteilhafterweise auf die Vorsehung einer Batterie als Energieversorgungsvorrichtung für die Kommunikationsvorrichtung verzichtet werden kann. Dies insbesondere deshalb, weil im Kontext der vorliegenden Erfindung die Kommunikationsvorrichtung selbst in der Lage ist, die für ihren Betrieb benötigte Energie aus dem Arbeitsprozess der Werkzeugmaschine zu gewinnen. Auf diese Weise kann eine sehr kleine, kompakte Kommunikationsvorrichtung bereitgestellt werden, die besonders einfach und unkompliziert in ein Werkzeug einer Werkzeugmaschine integriert werden kann. Es war vollkommen überraschend, dass durch die Erfindung auf die Vorsehung einer Batterie als Energieversorgungsvorrichtung in einer Kommunikationsvorrichtung verzichtet werden kann. Es stellt einen wesentlichen Vorteil der Erfindung dar, dass eine Kommunikationsvorrichtung, die eine Energy Harvesting-Funktion aufweist, auch in sehr dünne Werkzeuge, wie Trenn-, Schneide- oder Sägeblätter, integriert werden kann. Selbstverständlich kann auch im Kontext der vorliegenden Erfindung ein Lesegerät an der Werkzeugmaschine und/oder an dem Werkzeug vorgesehen sein. Allerdings ist die Kommunikationsvorrichtung der vorliegenden Erfindung aufgrund ihrer Energy Harvesting-Fähigkeit nicht darauf angewiesen, von diesem Lesegerät mit Energie versorgt zu werden. Stattdessen kann die Kommunikationsvorrichtung der vorliegenden Erfindung auch ohne das Vorhandensein eines Lesegeräts Betriebsparameter aufzeichnen und versenden. Es ist im Sinne der Erfindung ganz besonders bevorzugt, dass das Lesegerät in einem Sägearm der Werkzeugmaschine angeordnet vorliegt, wenn die Werkzeugmaschine als Sägevorrichtung ausgebildet ist.

Die bevorzugt als aktiver Tag oder Beacon ausgebildete Kommunikationsvorrichtung ist vorzugsweise dazu eingerichtet, von sich aus, d.h. «aktiv», Signale zu sende, ohne dabei auf eine fremde Energieversorgung angewiesen zu sein. Damit wendet sich die Erfindung von solchen Werkzeugmaschinen ab, bei denen passive Tags verwendet werden, die mit einem Lesegerät («reader») Informationen austauschen und von diesem auch mit Energie versorgt werden. Ein Datenaustausch ist bei solchen passiven Tags allerdings nur dann möglich, wenn ein Lesegerät in der Nähe ist. Somit kann mit passiven Tags, wie sie aus dem Stand der Technik bekannt sind, keine lückenlose Aufzeichnung von Betriebsparametern gewährleistet werden. Eine solche lückenlose Aufzeichnung von Betriebsparametem der Werkzeugmaschine und/oder ihres Werkzeugs wird vorteilafterweise mit der vorliegenden Erfindung ermöglicht, indem die Betriebsenergie für die Kommunikationsvorrichtung aus dem Arbeitsprozess der Werkzeugmaschine heraus bzw. aus ihrem Betrieb heraus gewonnen wird. Die Erfindung kann vorteilhafterweise in solchen Anwendungsfällen zum Einsatz kommen, bei denen der Einsatz einer Batterie als Energieversorgungsvorrichtung aufgrund eines zu geringen zur Verfügung stehenden Bauraums nicht oder nur eingeschränkt möglich ist. Es war vollkommen überraschend, dass mit der Erfindung eine im Wesentlichen lückenlose Aufzeichnung der Betriebsparametern der Werkzeugmaschine und/oder seines Werkzeugs ermöglicht werden kann, ohne dass an der Werkzeugmaschine und/oder seinem Werkzeug ein Lesegerät zur Energieversorgung der Kommunikationsvorrichtung vorgesehen sein muss. Diese Ertüchtigung einer Werkzeugmaschine zur lückenlosen Aufzeichnung von Betriebsparametern in Abwesenheit eines Lesegeräts stellt einen wesentlichen Vorteil der Erfindung dar.

Die Kommunikation im Kontext der vorliegenden Erfindung kann beispielsweise auf Bluetooth oder auf NFC beruhen. Die Verwendung von Bluetooth ist mit dem Vorteil verbunden, dass eine vergleichsweise große Entfernung zwischen den Kommunikationspartnern bestehen kann, beispielsweise in einer Größenordnung von 10 Metern (m). Der eine Kommunikationspartner kann in dieser Ausgestaltung der Erfindung beispielsweise von einer Fernbedienung gebildet werden. Bei der Verwendung von NFC als Kommunikationstechnologie liegen die Kommunikationspartner vorzugsweise an der Werkzeugmaschine und/oder ihren Komponenten angeordnet vor.

Die Gewinnung der Energie aus einem Arbeitsprozess der Werkzeugmaschine kann im Sinne der Erfindung bevorzugt auch als «Energy Harvesting» bezeichnet werden. Es ist im Sinne der Erfindung bevorzugt, dass der während des Betriebs der Werkzeugmaschine entstehenden Energie Leistung entzogen werden kann, um die bevorzugt aktiv ausgebildete Kommunikationsvorrichtung mit Energie zu versorgen. Die Kommunikationsvorrichtung kann die aus dem Arbeitsprozess der Werkzeugmaschine gewonnene Energie dann nutzen, um Betriebsparameter der Werkzeugmaschine und/oder des Werkzeugs zu ermitteln und zu speichern, d.h. aufzuzeichnen.

Eine Grundidee, die der Erfindung zugrunde liegt, besteht darin, dass die Energie für den Betrieb der Kommunikationsvorrichtung gewonnen bzw. aus dem Arbeitsprozess der Werkzeugmaschine abgezweigt werden kann, sobald die Werkzeugmaschine arbeitet, d.h. in Betrieb ist. Die für den Betrieb der Kommunikationsvorrichtung erforderliche Energie kann im Sinne der Erfindung bevorzugt auch als «Betriebsenergie» bezeichnet werden. Aufgrund der Energiegewinnung während des Betriebs der Werkzeugmaschine steht der bevorzugt aktiv ausgebildeten Kommunikationsvorrichtung vorteilhafterweise immer dann, wenn mit der Werkzeugmaschine gearbeitet wird, ausreichend Energie zur Verfügung, um Betriebsparameter der Werkzeugmaschine und/oder des Werkzeugs aufzuzeichnen. Dadurch kann vorteilhafterweise eine im Wesentlichen lückenlose Aufzeichnung der Betriebsparameter der Werkzeugmaschine und/oder des Werkzeugs ermöglicht werden. Insbesondere ist die Arbeit der im Kontext der vorliegenden Erfindung verwendeten Kommunikationsvorrichtung nicht von einem etwaigen Lesegerät abhängig, von dem es Energie beziehen würde. Vielmehr wendet sich die Erfindung gerade von solchen Kommunikationssystemen ab, bei denen eine konventionelle, passive Kommunikationsvorrichtung ihre Betriebsenergie von einem Lesegerät bezieht und ohne dieses Lesegerät auch nicht arbeiten kann.

Es ist im Sinne der Erfindung bevorzugt, dass die Kommunikationsvorrichtung Bestandteil des Werkzeugs der Werkzeugmaschine ist. Werkzeuge von Werkzeugmaschine können in unterschiedlichen Werkzeugmaschinen zum Einsatz kommen bzw. untereinander ausgetauscht werden, wobei die Werkzeuge in manchen Fällen sogar in Werkzeugmaschinen unterschiedlicher Hersteller eingesetzt werden können. Wenn nun einige Werkzeugmaschinen über ein Lesegerät verfügen und andere Werkzeugmaschinen nicht, so könnten die Betriebsparameter der Werkzeugmaschine und/oder des Werkzeugs nicht lückenlos aufgezeichnet werden, wenn die Kommunikationsvorrichtung auf eine Energieversorgung durch ein Lesegerät angewiesen ist und die Werkzeugmaschine, in der das Werkzeug mit der passiven Kommunikationsvorrichtung eingesetzt werden soll, kein Lesegerät aufweist. Durch diese Informationslücken kann es zu einer fehlerhaften Aus- oder Bewertung der aufgezeichneten Daten kommen, die zu Sicherheitsrisiken führen kann. Wenn die aufgezeichneten Betriebsparameter beispielsweise die Laufzeit einer Werkzeugmaschine und/oder des Werkzeugs betreffen, können bei nicht-lückenloser Aufzeichnung dieser Daten Warn- oder Wartungshinweise zur falschen Zeit, in der Regel verspätet, an den Nutzer der Werkzeugmaschine gesendet werden. Der Betriebsparameter kann beispielsweise auch einen Abnutzungsgrund des Werkzeugs der Werkzeugmaschine umfassen. Der Abnutzungsgrund des Werkzeugs der Werkzeugmaschine kann insbesondere bezogen auf eine geschnittene Fläche (zum Beispiel in der Einheit Quadratmeter, m²) oder auf eine Laufzeit der Werkzeugmaschine angegeben werden.

Im Kontext der vorliegenden Erfindung können die Betriebsparameter der Werkzeugmaschine und/oder des Werkzeugs auch bei Einsatz des Werkzeugs in unterschiedlichen Werkzeugmaschinen im Wesentlich lückenlos aufgezeichnet werden, unabhängig davon, ob in den Werkzeugmaschinen Lesegeräte vorhanden sind oder nicht. Denn die Kommunikationsvorrichtung ist durch ihre Energy Harvesting-Fähigkeit vorteilhafterweise in der Lage, Energie aus dem Arbeitsprozess der Werkzeugmaschine zu gewinnen bzw. abzuzweigen. Insbesondere kann der bei der Arbeit mit der Werkzeugmaschine entstehenden Energie Leistung entzogen und auf diese Weise Energie für den Betrieb der Kommunikationsvorrichtung erzeugt bzw. gewonnen werden. Die Formulierung «Arbeitsprozess der Werkzeugmaschine» kann im Sinne der Erfindung bevorzugt gleichbedeutend mit den Formulierungen «Betrieb der Werkzeugmaschine» oder «Durchführung eines Arbeitsprozesses mit der Werkzeugmaschine» verwendet werden.

Bei der Werkzeugmaschine kann es sich vorzugsweise um eine Säge handeln. Das Werkzeug der Werkzeugmaschine kann ein Sägeblatt sein. Es ist somit im Sinne der Erfindung bevorzugt, dass das Sägeblatt der Säge eine Kommunikationsvorrichtung umfasst, wobei die Kommunikationsvorrichtung dazu eingerichtet ist, Betriebsparameter der Säge und/oder des Sägeblattes aufzuzeichnen, wobei die Kommunikationsvorrichtung darüber hinaus dazu eingerichtet ist, die für die Ermittlung und Speicherung der Betriebsparameter erforderliche Energie aus einem Arbeitsprozess der Säge zu gewinnen. Insbesondere kann durch das Energy Harvesting Energie für eine Elektronik der Kommunikationsvorrichtung gewonnen werden. Der Arbeitsprozess der Werkzeugmaschine kann dann beispielsweise als «Sägen» oder als «Sägeprozess» bezeichnet werden. Selbstverständlich kann die Werkzeugmaschine auch jede andere Werkzeugmaschine mit Werkzeug sein, wie Schneid- oder Trenngeräte, Bohrgeräte oder Kernbohrgeräte, Meißelgeräte, Bohrhämmer usw.

Die Gewinnung der Energie für eine Kommunikationsvorrichtung, die in einem Werkzeug einer Werkzeugmaschine angeordnet vorliegt, wird im Folgenden anhand eines Ausführungsbeispiels der Erfindung geschildert. In diesem Ausführungsbeispiel ist die Werkzeugmaschine eine Säge und ihr Werkzeug ein Sägeblatt. Die Säge kann beispielsweise eine Betonsäge sein. Um Beton zerteilen zu können, weisen die Sägeblätter solcher Sägen häufig Segmente auf, die Diamanten oder Diamantsplitter aufweisen können, um die Schneidleistung zu erhöhen. Beim Sägen mit solchen bevorzugt diamant-besetzten Sägeblättern werden die Segmente des Sägeblattes mit hoher Kraft in den zu bearbeitenden Beton-Untergrund gedrückt. Dadurch werden sog. Mikrosprengungen hervorgerufen, die eine Grundvibration des Sägeprozesses erzeugen. Mit anderen Worten können beim Sägen mit bevorzugt diamant-besetzten Sägeblättern starke Vibrationen entstehen, die im Kontext der vorliegenden Erfindung als «Grundvibration» bezeichnet werden. Die Grundvibration entsteht vorzugsweise durch den Sägeprozess und das Hineindrücken des segmentbesetzten Sägeblattes in den zu bearbeitenden Untergrund.

Die Segmente können beispielsweise beabstandet auf einem Umfang des Sägeblatts angeordnet vorliegen. Es ist im Sinne der Erfindung besonders bevorzugt, dass die Segmente gleichmäßig auf dem Umfang des Sägeblatts angeordnet vorliegen. Durch die bevorzugt beabstandete Anordnung der Segmente auf dem Umfang des Sägeblatts kann die Grundvibration des Sägeblattes von einer zusätzlichen mechanischen Vibration überlagert werden. Tests haben gezeigt, dass die Frequenz dieser zusätzlichen mechanischen Vibration besonders regelmäßig ist, wobei diese besonders regelmäßige Frequenz der zusätzlichen mechanischen Vibration insbesondere auf die im Wesentlichen konstante, d.h. gleichbleibende Umfangsgeschwindigkeit des Sägeblattes zurückzuführen ist. Dies gilt vor allem dann, wenn die bevorzugt diamant-besetzten Segmente gleichmäßig auf dem Umfang des Sägeblatts angeordnet vorliegen. Es ist im Sinne der Erfindung ganz besonders bevorzugt, dass die Gewinnung der Betriebsenergie für die Kommunikationsvorrichtung unter Ausnutzung dieser Vibrationen des Werkzeugs, beispielsweise eines Sägeblattes, erfolgt. Um dies zu ermöglichen, kann die Kommunikationsvorrichtung ein schwingungsfähiges System umfassen, das im Folgenden konkreter beschrieben wird:
Es ist im Sinne der Erfindung bevorzugt, dass die Kommunikationsvorrichtung ein schwingungsfähiges System zur elektromagnetischen Gewinnung von Energie aus dem Arbeitsprozess der Werkzeugmaschine umfasst. Vorzugsweise kann das schwingungsfähige System einen Magneten und eine Spule aufweisen. Das schwingungsfähige System kann beispielsweise von einem Feder-Masse-System gebildet werden, wobei die Masse des Feder-Masse-Systems von dem Magneten gebildet werden kann. Der Magnet kann beispielsweise über eine Spule bewegt werden, so dass in der Spule auf physikalisch bekannte Weise ein Strom induziert und Energie für den Betrieb der Kommunikationsvorrichtung gewonnen wird (elektromagnetische Induktion). Die Induzierung des Stroms erfolgt insbesondere durch eine Relativbewegung von Magnet und Spule, wobei diese Relativbewegung durch die Vibrationen des Werkzeugs der Werkzeugmaschine hervorgerufen wird.

In obigem Ausführungsbeispiel der Erfindung wird die Relativbewegung vorzugsweise durch die Vibrationen des Sägeblatts der Säge hervorgerufen. Dabei kann das schwingungsfähige System beispielsweise so ausgelegt werden, dass die Feder derart dimensioniert ist, dass die Feder mit der Frequenz der Vibrationen des Arbeitsprozesses schwingt. Mit anderen Worten kann die Feder des schwingungsfähigen Feder-Masse-Systems so dimensioniert werden, dass die Frequenzen der Grundvibration und/oder der zusätzlichen mechanischen Vibration Eigenfrequenzen des schwingungsfähigen Feder-Masse-Systems sind.

Es ist im Sinne der Erfindung ganz besonders bevorzugt, dass die Frequenz der zusätzlichen mechanischen Vibration, die vorteilhafterweise besonders regelmäßig ist, zur Auslegung des schwingungsfähigen Systems bzw. zur Einstellung dessen Eigenfrequenz herangezogen wird. Die Feder des bevorzugt als Feder-Masse-System ausgebildeten schwingungsfähigen Systems kann beispielsweise als Membran ausgebildet sein. Mit anderen Worten entspricht die Feder vorzugsweise der Membran.

Es ist im Sinne der Erfindung bevorzugt, dass die Kommunikationsvorrichtung einen Kondensator zur Speicherung der Energie, die mit dem schwingungsfähigen System erzeugt wird, umfasst. Mit anderen Worten kann mit der Energie, die mit Hilfe des Magneten und der Spule des schwingungsfähigen Systems gewonnen werden kann, ein Kondensator geladen werden, der Bestandteil der Kommunikationsvorrichtung ist. Wenn der Kondensator ausreichend aufgeladen ist, kann mit seiner Energie die Kommunikationsvorrichtung «aufgeweckt» werden, damit die Kommunikationsvorrichtung mit der Aufzeichnung der Betriebsparameter der Werkzeugmaschine und/oder seines Werkzeugs beginnen kann. Es ist im Sinne der Erfindung ganz besonders bevorzugt, dass mit der Energie des Kondensators eine Elektronik der Kommunikationsvorrichtung aufgeweckt werden kann, um mit ihrer Arbeit, d.h. der Aufzeichnung von Betriebsparametern, zu beginnen. Die Formulierung «ausreichende Energie» ist für den Fachmann keine unklare Formulierung, weil der Fachmann aufgrund seiner Erfahrung weiß, wieviel Energie eine bevorzugt aktiv ausgebildete Kommunikationsvorrichtung benötigt, um Betriebsparameter aufzuzeichnen und ggf. in regelmäßigen Zeitabständen zu versenden.

Die Begriffe «Aufzeichnung» und «aufzeichnen» werden im Sinne der Erfindung als Oberbegriff für das Ermitteln und Speichern der Betriebsparameter verwendet. Vorzugsweise werden im Rahmen der Aufzeichnung der Betriebsparameter die Betriebsparameter der Werkzeugmaschine und/oder des Werkzeugs ermittelt, d.h. erfasst oder detektiert, wobei die Betriebsparameter anschließend gespeichert werden können. Dazu kann die Kommunikationsvorrichtung einen Speicher umfassen, in dem die Betriebsparameter als Rohdaten und/oder in verarbeiteter Form abgespeichert werden können. Insbesondere ermöglicht die bevorzugt lückenlose Aufzeichnung der Betriebsparameter, dass die Betriebsparameter regelmäßig an eine externe Vorrichtung, an einen Server oder in eine Cloud übertragen und dort ausgewertet oder informationstechnologisch weiterverarbeitet werden können.

Es ist somit im Sinne der Erfindung bevorzugt, dass die Kommunikationsvorrichtung dazu eingerichtet ist, Betriebsparameter der Werkzeugmaschine und/oder des Werkzeugs zu ermitteln und zu speichern, wobei die Kommunikationsvorrichtung darüber hinaus dazu eingerichtet ist, die für die Erfassung und Speicherung der Betriebsparameter erforderliche Energie aus einem Arbeitsprozess der Werkzeugmaschine zu gewinnen.

Die Betriebsparameter der Werkzeugmaschine und/oder des Werkzeugs können beispielsweise eine Laufzeit der Werkzeugmaschine und/oder des Werkzeugs betreffen oder einen Abnutzungsgrad, eine bearbeitete Fläche, eine Anzahl von Umdrehungen, eine Anzahl von Start- oder Stop-Vorgängen, das Vorkommen eines Falschgebrauchs der Werkzeugmaschine, eine Temperatur oder dergleichen, ohne darauf beschränkt zu sein.

Neben der elektromagnetischen Gewinnung von Energie für den Betrieb der Kommunikationsvorrichtung mit Hilfe des schwingungsfähigen Systems können im Kontext der vorliegenden Erfindung auch anderen Verfahren zur Energiegewinnung eingesetzt werden. Beispielsweise kann in obigem Ausführungsbeispiel, in dem die Werkzeugmaschine als Säge ausgebildet ist, Wärme an den bevorzugt diamantbesetzten Segmenten des Sägeblatts entstehen, wenn mit der Säge gearbeitet wird. Die beim Sägeprozess entstehende Wärme bzw. der entstehende Temperaturgradient kann beispielsweise unter Verwendung eines Peltier-Elements genutzt werden, um Energie zum Betrieb der Kommunikationsvorrichtung zu gewinnen. In diesem Ausführungsbeispiel der Erfindung kann die Kommunikationsvorrichtung ein wärmeumwandelndes Element zur thermischen Gewinnung von Energie aus dem Arbeitsprozess der Werkzeugmaschine umfassen. Das wärmeumwandelnde Element kann zum Beispiel als Peltier-Element ausgebildet sein oder mindesten ein Peltier-Element umfassen. Diese Art der Energiegewinnung kann im Sinne der Erfindung als «thermische Energiegewinnung» bezeichnet werden.

Bei Betrieb der Werkzeugmaschine kann darüber hinaus elektromagnetische Strahlung entstehen. Diese elektromagnetische Strahlung entsteht beispielsweise im Bereich des Motors der Werkzeugmaschine, insbesondere aufgrund der hohen nominalen Leistung des Werkzeugmaschinen-Motors. Zur Umwandlung dieser elektromagnetischen Strahlung in Energie für den Betrieb der Kommunikationsvorrichtung kann die Kommunikationsvorrichtung eine Vorrichtung zur Umwandlung von elektromagnetischer Strahlung aus dem Arbeitsprozess der Werkzeugmaschine umfassen, wobei die Vorrichtung zur Umwandlung von elektromagnetischer Strahlung vorzugsweise mindestens eine Antenne umfasst. Mit anderen Worten kann die elektromagnetische Strahlung, die vorzugsweise im Bereich des Motors der Werkzeugmaschine entsteht bzw. von dort abgestrahlt wird, von mindestens einer Antenne, die vorzugsweise Bestandteil der Kommunikationsvorrichtung ist, in Energie zum Betrieb der Kommunikationsvorrichtung umgewandelt werden. Diese Art der Energiegewinnung kann im Sinne der Erfindung als «elektromagnetische Energiegewinnung» bezeichnet werden.

Um das Werkzeug während des Arbeitsprozesses in dem zu bearbeitenden Untergrund zu bewegen, ist ein relativ hohes Drehmoment erforderlich. Diese hohen Drehmomente, die vorzugsweise Kräfte im Sägeblatt darstellen, können von einer Vorrichtung zur Umwandlung von mechanischer Energie aus dem Arbeitsprozess der Werkzeugmaschine in eine Energie zum Betrieb der Kommunikationsvorrichtung umgewandelt werden. Mit anderen Worten kann die Kommunikationsvorrichtung eine Vorrichtung zur Umwandlung von mechanischer Energie aus dem Arbeitsprozess der Werkzeugmaschine umfassen. Es ist im Sinne der Erfindung bevorzugt, dass die Vorrichtung zur Umwandlung von mechanischer Energie mindestens ein piezoelektrisches Element umfasst, wobei das mindestens eine piezoelektrische Element dazu eingerichtet ist, die Drehmomente und/oder Kräfte im Sägeblatt in Energie zum Betrieb der Kommunikationsvorrichtung umzuwandeln. Das bedeutet im Sinne der Erfindung bevorzugt, dass mit dem mindestens einen piezoelektrischen Element die Drehmomente und/oder Kräfte im Sägeblatt, die im Sinne der Erfindung mit dem Oberbegriff «mechanische Kräfte» zusammengefasst werden können, in Energie zum Aufzeichnen der Betriebsparameter der Werkzeugmaschine und/oder des Werkzeugs umgewandelt werden können. Diese Art der Energiegewinnung kann im Sinne der Erfindung als «mechanische Energiegewinnung» bezeichnet werden.

Es ist im Sinne der Erfindung bevorzugt, dass die Energie, die aus dem Betrieb der Werkzeugmaschine gewonnen wird, elektromagnetisch, thermisch und/oder mechanisch gewonnen wird. Mit dem Begriff «elektromagnetische» Energiegewinnung ist vorzugsweise die Gewinnung der Betriebsenergie für die Kommunikationsvorrichtung im Werkzeug der Werkzeugmaschine mit Hilfe eines schwingungsfähigen Systems gemeint, dessen Masse ein Magnet ist und das darüber hinaus eine Spule umfasst. Des Weiteren kann mit dem Begriff «elektromagnetische Energiegewinnung» die Umwandlung von elektromagnetischer Strahlung in Betriebsenergie für die Kommunikationsvorrichtung bezeichnet werden. Für diese Umwandlung von elektromagnetischer Strahlung in Energie für die Kommunikationsvorrichtung kann beispielsweise mindestens eine Antenne verwendet werden. Mit dem Begriff «thermische Energiegewinnung» ist die Ausnutzung von Wärme, die beim Arbeitsprozess der Werkzeugmaschine entsteht, gemeint. Dazu kann beispielsweise ein Peltier-Element verwendet werden. Vorzugsweise wird bei der thermischen Energiegewinnung ein Temperaturgradient ausgenutzt, um die Betriebsenergie für die Kommunikationsvorrichtung zu erhalten. Mit dem Begriff «mechanische Energiegewinnung» ist vorzugsweise die Umwandlung von Drehmomenten und/oder von Kräften im Werkzeug, beispielsweise im Sägeblatt, in Betriebsenergie für die Kommunikationsvorrichtung gemeint. Für diese Umwandlung von mechanischen Kräften in eine Betriebsenergie für die Kommunikationsvorrichtung kann beispielsweise mindestens ein piezoelektrisches Element verwendet werden.

In einem zweiten Aspekt betrifft die Erfindung ein Verfahren zur Gewinnung von Energie für eine Kommunikationsvorrichtung, die in einem Werkzeug einer vorgeschlagenen Werkzeugmaschine angeordnet vorliegt. Die Definitionen, technischen Wirkungen und Vorteile, die für die Werkzeugmaschine beschrieben wurden, gelten für das vorgeschlagene Energiegewinnungsverfahren analog. Das Verfahren zum Energy Harvesting im Kontext einer Werkzeugmaschine ist durch die folgenden Verfahrensschritte gekennzeichnet:
a) Bereitstellung der Werkzeugmaschine mit einem Werkzeug, wobei das Werkzeug eine Kommunikationsvorrichtung umfasst,
b) Betrieb der Werkzeugmaschine,
c) Gewinnung von Energie aus dem Betrieb der Werkzeugmaschine durch die Kommunikationsvorrichtung,
d) Aufzeichnung von Betriebsparametern der Werkzeugmaschine und/oder des Werkzeugs durch die Kommunikationsvorrichtung, wobei die für die Aufzeichnung der Betriebsparameter erforderliche Energie von der Kommunikationsvorrichtung aus dem Betrieb der Werkzeugmaschine gewonnen wird.

Es ist im Sinne der Erfindung bevorzugt, dass die Energie, die aus dem Betrieb der Werkzeugmaschine gewonnen wird, elektromagnetisch, thermisch und/oder mechanisch gewonnen wird. Vorzugsweise kann die Energie, die aus dem Betrieb der Werkzeugmaschine gewonnen wird, unter Verwendung eines schwingungsfähigen Systems gewonnen werden, wobei das schwingungsfähige System zumindest einen Magneten und eine Spule aufweist. Es ist im Sinne der Erfindung ganz besonders bevorzugt, dass die Energie aus dem Arbeitsprozess der Werkzeugmaschine durch eine Relativbewegung zwischen Spule und Magnet gewonnen wird. Dabei kann die Relativbewegung zwischen Spule und Magnet insbesondere durch die Vibrationen, die bei Betrieb der Werkzeugmaschine entstehen, erzeugt werden. Mit anderen Worten können in dieser Ausführungsform der Erfindung die Vibrationen, die während der Arbeit mit der Werkzeugmaschine entstehen, ausgenutzt, um die Betriebsenergie für die Kommunikationsvorrichtung zur Aufzeichnung von Betriebsparametern der Werkzeugmaschine und/oder des Werkzeugs zu gewinnen.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: Ansicht einer bevorzugten Ausgestaltung des mobilen Energiespeichers
- Fig. 2: Ansicht einer bevorzugten Ausgestaltung eines schwingungsfähigen Systems
- Fig. 3: Verwendung eines schwingungsfähigen Systems an einer Werkzeugmaschine
- Fig. 4: Verwendung eines wärmeumwandelnden Elements an einer Werkzeugmaschine
- Fig. 5: Verwendung einer Vorrichtung zur Umwandlung von elektromagnetischer Strahlung an einer Werkzeugmaschine
- Fig. 6: Verwendung einer Vorrichtung zur Umwandlung von mechanischer Energie an einer Werkzeugmaschine

### Ausführungsbeispiele und Figurenbeschreibung:

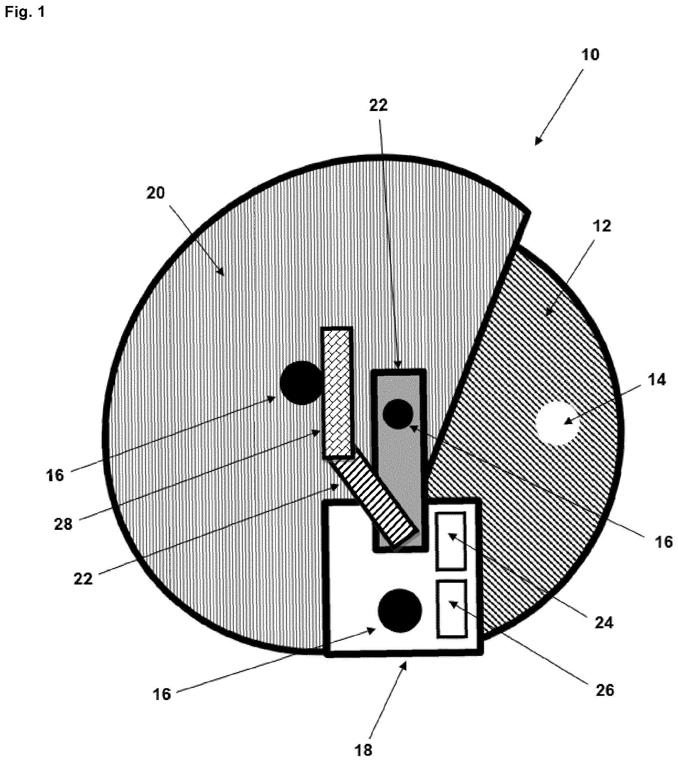

Figur 1 zeigt eine bevorzugte Ausgestaltung der vorgeschlagenen Werkzeugmaschine 10 als Wandsäge. Die Wandsäge 10 kann zum Einbringen von Schnitten in einen Untergrund mit einem Sägeblatt 12 verbunden werden, wobei das Sägeblatt 12 der Wandsäge 10 von einem Motor 26 der Wandsäge 10 zu einer Drehbewegung angetrieben werden kann. Während des Betriebs der Wandsäge 10 kann das Sägeblatt 12 zumindest teilweise von einem Blattschutz 20 umgeben sein, um einen Nutzer der Wandsäge 10 vor herumfliegenden Partikeln und Stücken aus dem Untergrund zu schützen. Der Blattschutz 20 kann über einen Schwenkarm 22 beweglich, insbesondere schwenkbar, mit der Wandsäge 10 verbunden vorliegen. Darüber hinaus weist die Wandsäge 10 einen Sägekopf 18 auf, in dem beispielsweise die Steuerelektronik 24 der enthalten sein kann. Die Steuerelektronik 24 ist vorzugsweise zur Steuerung der Wandsäge 10 eingerichtet. Der Blattschutz 20 kann von einem Blattschutzhalter 28 gehalten werden.

In dem in Figur 1 abgebildeten Ausführungsbeispiel der Erfindung weist das Sägeblatt 12 eine Kommunikationsvorrichtung 14 auf. Das bedeutet im Sinne der Erfindung bevorzugt, dass an dem Sägeblatt 12 eine Kommunikationsvorrichtung 14 vorgesehen ist. Die Kommunikationsvorrichtung 14 kann beispielsweise eine elektronische Baugruppe darstellen, die als Tag oder Beacon ausgebildet ist. Die Kommunikationsvorrichtung 14 ist dazu eingerichtet, mit einem Lesegerät 16 Daten auszutauschen, wobei das Lesegerät 16 die Kommunikationsvorrichtung 14 mit Energie versorgen kann. Es ist im Sinne der Erfindung allerdings besonders bevorzugt, dass die Kommunikationsvorrichtung 14 die für ihren Betrieb erforderliche Energie aus dem Betrieb der Wandsäge 10 gewinnen bzw. abzweigen kann. In dieser Ausgestaltung der Erfindung weist die Kommunikationsvorrichtung 14 eine Energy Harvesting-Funktion auf.

Das Lesegerät 16 ist Bestandteil der Wandsäge 10 und kann an verschiedenen Positionen an der Wandsäge 10 angeordnet vorliegen. Mögliche Positionen des Lesegeräts 16 an der Wandsäge 10 sind in Figur 1 mit schwarzen Kreisen dargestellt und mit dem Bezugszeichen 16 bezeichnet. Die vorgeschlagene Wandsäge 10 weist mindestens ein Lesegerät 16. Insbesondere kann das Lesegerät 16 an dem Sägekopf 18, dem Blattschutz 20, dem Blattschutzhalter 28 oder dem Schwenkarm 22 der Wandsäge 10 angeordnet vorliegen. Die Wandsäge 10 kann aber auch mehr als ein Lesegerät 16 aufweisen. Beispielsweise kann die Wandsäge 10 netzbetrieben sein, d.h. elektrische Energie von einem Stromnetz erhalten. Das Lesegerät 16 kann beispielsweise eine eigene kleine Batterie (nicht dargestellt) zur Energieversorgung aufweisen.

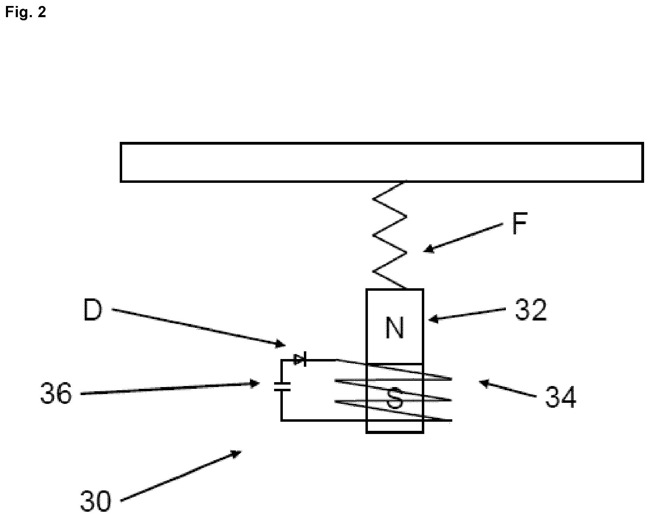

Figur 2 zeigt eine bevorzugte Ausgestaltung eines schwingungsfähigen Systems 30. Das schwingungsfähige System 30 kann eine Feder F und einen Magneten 32 umfassen. Die Pole des Magneten 32 sind in Figur 2 mit den Buchstaben N für Nordpol und S für Südpol gekennzeichnet. Bei dem in Figur 2 dargestellten Magneten 32 handelt es sich vorzugsweise um einen Dauermagneten 32 mit festen Polen N, S. Die Feder 32 in dem schwingungsfähigen System 30 kann beispielsweise auch von einem Dämpfer oder einer Membran gebildet werden. Der Magnet 32 kann in einer Spule 34 angeordnet vorliegen, wobei die Spule 34 in einem Stromkreis mit einem Kondensator 36 und/oder einer Diode D verbunden ist. Mit anderen Worten kann ein Stromkreis gebildet werden, der die Spule 34, den Kondensator 36 und eine Diode D umfasst.

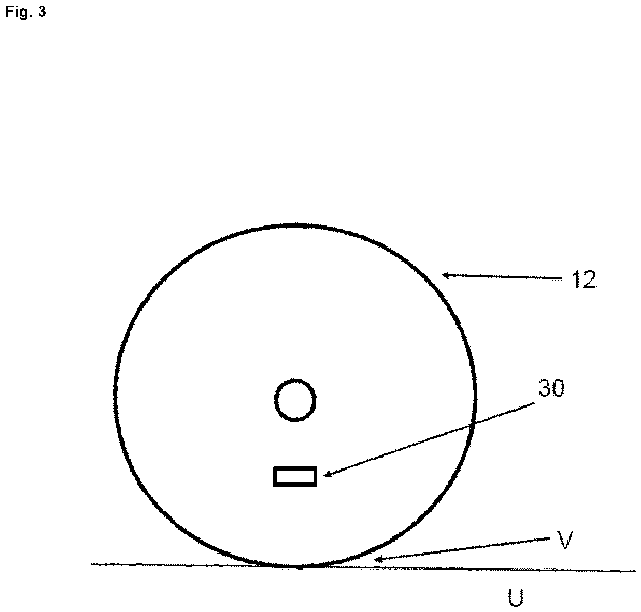

Wie in Figur 3 abgebildet, kann das schwingungsfähige System 30 an einem Werkzeug 12 einer Werkzeugmaschine 10, beispielsweise an einem Sägeblatt 12 eines Säge 10, angeordnet bzw. angebracht vorliegen. Wenn das Sägeblatt 12 den Untergrund U berührt, um diesen zu schneiden, kann es zu Vibrationen V kommen, die von dem schwingungsfähigen System 30 ermittelt und von einer Steuereinrichtung (nicht dargestellt) ausgewertet werden können.

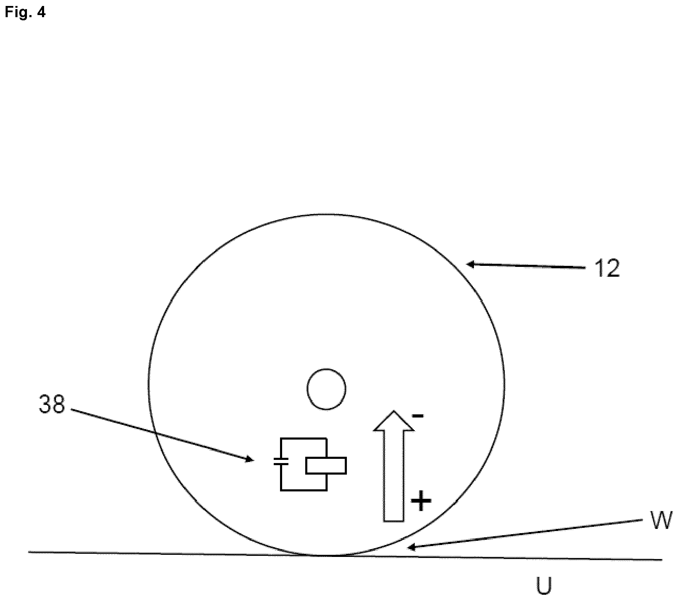

In Figur 4 ist die Verwendung eines wärmeumwandelnden Elements 38 an einer Werkzeugmaschine 10 dargestellt. Bei der Bearbeitung des Untergrunds U durch ein Werkzeug 12 der Werkzeugmaschine 10 können nicht nur Vibrationen V, sondern auch Wärme W entstehen. Vorteilhafterweise kann auch die Wärme W ausgewertet werden, wenn ein wärmeumwandelndes Elements 38 bereitgestellt wird, das an einem Werkzeug 12 der Werkzeugmaschine 10 angeordnet bzw. angebracht vorliegen kann. Das wärmeumwandelnde Element 38 kann ebenfalls in einem Stromkreis eingebettet vorliegen. Der Pfeil im Bereich unten rechts des Sägeblattes 12 deutet in Figur 4 einen möglichen Verlauf der Wärme W innerhalb des Sägeblattes 12 an. Dabei ist es an der Position, die mit einem «Plus» (+) gekennzeichnet ist, wärmer als an einer Position, die mit einem «Minus» (-) gekennzeichnet ist. Bei dem in Figur 4 dargestellten Verlauf der Wärme W ist der Kontaktbereich zwischen Sägeblatt 12 und Untergrund U wärmer, wobei die Wärme W mit zunehmendem Abstand vom Kontaktbereich zwischen Sägeblatt 12 und Untergrund U abnimmt.

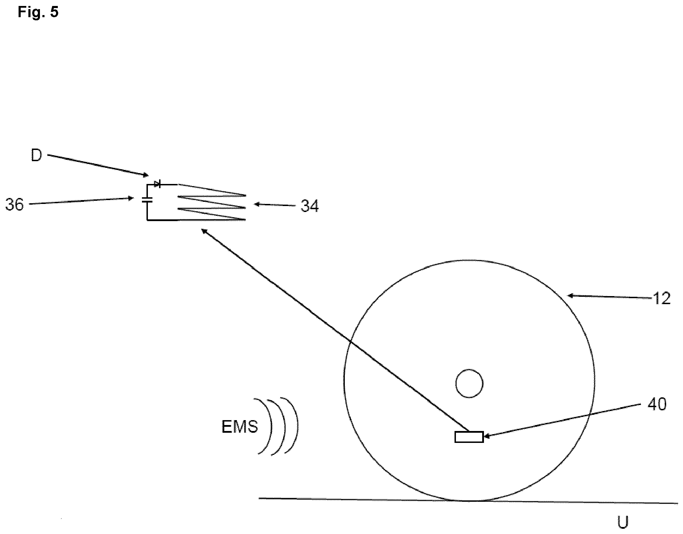

In Figur 5 ist die Verwendung einer Vorrichtung 40 zur Umwandlung von elektromagnetischer Strahlung EMS an einer Werkzeugmaschine 10 dargestellt. Die Vorrichtung 40 zur Umwandlung von elektromagnetischer Strahlung EMS, die insbesondere oben links in Figur 5 abgebildet ist, kann eine Spule 34 und einen Kondensator 36, sowie eine Diode D umfassen. Die Vorrichtung 40 zur Umwandlung von elektromagnetischer Strahlung EMS kann an einem Sägeblatt 12 der Werkzeugmaschine 10 angeordnet bzw. angebracht vorliegen. Elektromagnetische Strahlung EMS, die mit der Vorrichtung 40 zur Umwandlung von elektromagnetischer Strahlung EMS erfasst werden kann, ist in Figur 5 links neben dem Sägeblatt 12 schematisch dargestellt.

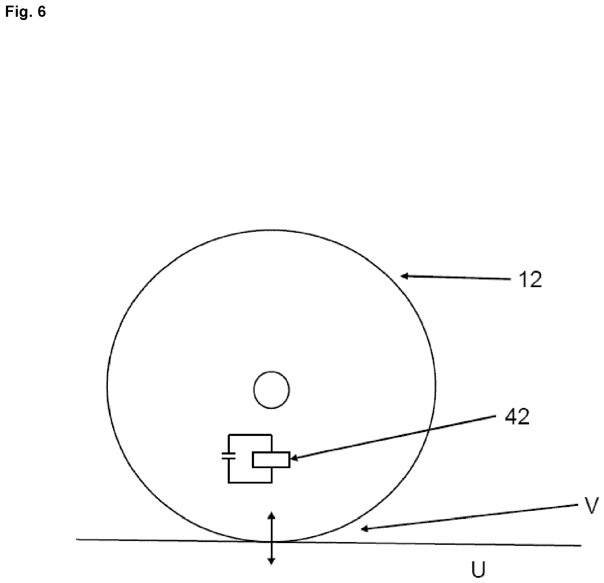

In Figur 6 ist die Verwendung einer Vorrichtung 42 zur Umwandlung von mechanischer Energie an einer Werkzeugmaschine 10 dargestellt. Mit der Vorrichtung 42 zur Umwandlung von mechanischer Energie können beispielsweise Vibrationen V, die vorzugsweise im Kontaktbereich zwischen Sägeblatt 12 und Untergrund U auftreten, erfasst werden. Beispielsweise kann die Vorrichtung 42 zur Umwandlung von mechanischer Energie ein piezoelektrisches Element umfassen oder aus einem solchen gebildet sein.

### Bezugszeichenliste

- 10: Werkzeugmaschine, beispielsweise Wandsäge
- 12: Werkzeug der Werkzeugmaschine, beispielsweise Sägeblatt
- 14: Kommunikationsvorrichtung
- 16: Lesegerät
- 18: Sägekopf
- 20: Blattschutz
- 22: Schwenkarm
- 24: Steuerelektronik
- 26: Motor der Werkzeugmaschine bzw. der Wandsäge
- 28: Blattschutzhalter
- 30: schwingungsfähiges System
- 32: Magnet
- 34: Spule
- 36: Kondensator
- 38: wärmeumwandelndes Element
- 40: Vorrichtung zur Umwandlung von elektromagnetischer Strahlung
- 42: Vorrichtung zur Umwandlung von mechanischer Energie
- D: Diode
- F: Feder
- U: Untergrund
- V: Vibrationen
- N: Nordpol eines Magneten
- S: Südpol eines Magneten
- W: Wärme
- EMS: elektromagnetische Strahlung

## Patentansprüche

1. Werkzeugmaschine (10) mit einem Werkzeug (12),
**dadurch gekennzeichnet, dass**
das Werkzeug (12) der Werkzeugmaschine (10) eine Kommunikationsvorrichtung (14) umfasst, wobei die Kommunikationsvorrichtung (14) dazu eingerichtet ist, Betriebsparameter der Werkzeugmaschine (10) und/oder des Werkzeugs (12) aufzuzeichnen, wobei die Kommunikationsvorrichtung (14) darüber hinaus dazu eingerichtet ist, die für die Aufzeichnung der Betriebsparameter erforderliche Energie aus einem Arbeitsprozess der Werkzeugmaschine (10) zu gewinnen.

2. Werkzeugmaschine (10) nach Anspruch 1
**dadurch gekennzeichnet, dass**
die Kommunikationsvorrichtung (14) als aktive Kommunikationsvorrichtung ausgebildet ist.

3. Werkzeugmaschine (10) nach Anspruch 1 oder 2
**dadurch gekennzeichnet, dass**
die Kommunikationsvorrichtung (14) ein schwingungsfähiges System (30) zur elektromagnetischen Gewinnung von Energie aus dem Arbeitsprozess der Werkzeugmaschine (10) umfasst.

4. Werkzeugmaschine (10) nach 3
**dadurch gekennzeichnet, dass**
das schwingungsfähige System (30) einen Magneten (32) und eine Spule (34) aufweist.

5. Werkzeugmaschine (10) nach Anspruch 3 oder 4
**dadurch gekennzeichnet, dass**
die Kommunikationsvorrichtung (14) einen Kondensator (36) zur Speicherung der Energie, die mit dem schwingungsfähigen System (30) erzeugt wird, umfasst.

6. Werkzeugmaschine (10) nach einem der vorhergehenden Ansprüche
**dadurch gekennzeichnet, dass**
die Kommunikationsvorrichtung (14) ein wärmeumwandelndes Element (38) zur thermischen Gewinnung von Energie aus dem Arbeitsprozess der Werkzeugmaschine (10) umfasst.

7. Werkzeugmaschine (10) nach Anspruch 6
**dadurch gekennzeichnet, dass**
das wärmeumwandelnde Element (38) als Peltier-Element ausgebildet ist oder mindestens ein Peltier-Element umfasst.

8. Werkzeugmaschine (10) nach einem der vorhergehenden Ansprüche
**dadurch gekennzeichnet, dass**
die Kommunikationsvorrichtung (14) eine Vorrichtung (40) zur Umwandlung von elektromagnetischer Strahlung aus dem Arbeitsprozess der Werkzeugmaschine (10) umfasst.

9. Werkzeugmaschine (10) nach Anspruch 8
**dadurch gekennzeichnet, dass**
die Vorrichtung (40) zur Umwandlung von elektromagnetischer Strahlung mindestens eine Antenne umfasst.

10. Werkzeugmaschine (10) nach einem der vorhergehenden Ansprüche
**dadurch gekennzeichnet, dass**
die Kommunikationsvorrichtung (14) eine Vorrichtung (42) zur Umwandlung von mechanischer Energie aus dem Arbeitsprozess der Werkzeugmaschine (10) umfasst.

11. Werkzeugmaschine (10) nach Anspruch 10
**dadurch gekennzeichnet, dass**
die Vorrichtung (42) zur Umwandlung von mechanischer Energie mindestens ein piezoelektrisches Element umfasst.

12. Verfahren zur Gewinnung von Energie für eine Kommunikationsvorrichtung (14), die in einem Werkzeug (12) einer Werkzeugmaschine (10) nach einem der vorhergehenden Ansprüche angeordnet vorliegt
**gekennzeichnet durch die folgenden Verfahrensschritte:**
a) Bereitstellung der Werkzeugmaschine (10) mit einem Werkzeug (12), wobei das Werkzeug (12) eine Kommunikationsvorrichtung (14) umfasst,
b) Betrieb der Werkzeugmaschine (10),
c) Gewinnung von Energie aus dem Betrieb der Werkzeugmaschine (10) durch die Kommunikationsvorrichtung (14),
d) Aufzeichnung von Betriebsparametern der Werkzeugmaschine (10) und/oder des Werkzeugs (12) durch die Kommunikationsvorrichtung (14), wobei die für die Aufzeichnung der Betriebsparameter erforderliche Energie von der Kommunikationsvorrichtung (14) aus dem Betrieb der Werkzeugmaschine (10) gewonnen wird.

13. Verfahren nach Anspruch 12,
**dadurch gekennzeichnet, dass**
die Energie, die aus dem Betrieb der Werkzeugmaschine (10) gewonnen wird, elektromagnetisch, thermisch und/oder mechanisch gewonnen wird.

14. Verfahren nach Anspruch 12 oder 13,
**dadurch gekennzeichnet, dass**
die Energie, die aus dem Betrieb der Werkzeugmaschine (10) gewonnen wird, unter Verwendung eines schwingungsfähigen Systems (30) gewonnen wird, wobei das schwingungsfähige System (30) zumindest einen Magneten (32) und eine Spule (34) aufweist.

15. Verfahren nach Anspruch 14
**dadurch gekennzeichnet, dass**
die Energie aus dem Arbeitsprozess der Werkzeugmaschine (10) durch eine Relativbewegung zwischen Spule (34) und Magnet (32) gewonnen wird.
